# EUROPÄISCHE PATENTSCHRIFT

(11) **EP 3 123 869 B1**
(45) Veröffentlichungstag und Bekanntmachung des Hinweises auf die Patenterteilung: **05.12.2018**
(21) Anmeldenummer: 15178393.3
(22) Anmeldetag: 25.07.2015
(51) Int. Cl.: A23C 9/15, A23C 9/12, A23C 9/142

(54) **VERFAHREN ZUR HERSTELLUNG VON LAKTOSEFREIEN MILCHPRODUKTEN**
PROCESS FOR MAKING DAIRY PRODUCTS FREE OF LACTOSE
PROCÉDÉ POUR LA PRÉPARATION DE PRODUITS DU LAIT SANS LACTOSE

(43) Veröffentlichungstag der Anmeldung: 01.02.2017
(73) Patentinhaber: DMK Deutsches Milchkontor GmbH, 27404 Zeven (DE)
(72) Erfinder: Aschemann, Jan, 27404 Zeven (DE); Oehlckers, Thorben, 21244 Buchholz (DE); Döring, Sven-Rainer, 27404 Zeven (DE)
(74) Vertreter: Fabry, Bernd

(56) Entgegenhaltungen:
- WO-A1-2009/043877
- US-A1- 2010 055 286
- US-A1- 2010 055 289

## Beschreibung

### GEBIET DER ERFINDUNG

Die Erfindung befindet sich auf dem Gebiet der lactosefreien Milcherzeugnisse.

### STAND DER TECHNIK

Neugeborene Säugetiere bilden während ihrer Stillzeit das Enzym Lactase, welches das Disaccharid Milchzucker in die vom Stoffwechsel verwertbaren Zuckerarten D-Galactose und D-Glucose spaltet. Im Laufe der natürlichen Entwöhnung von der Muttermilch sinkt die Aktivität der Lactase auf etwa 5-10 % der Aktivität bei der Geburt. Das gilt für den Menschen und alle anderen Säugetiere. Nur bei Populationen, die seit langer Zeit Milchwirtschaft betreiben, hat sich eine Mutation durchgesetzt, die dazu führt, dass auch noch im Erwachsenenalter genügend Lactase produziert wird (Lactasepersistenz). Vermutlich liegt das daran, dass die höhere Lactaseaktivität einen Selektionsvorteil (Mineralstoffe, Nährwert) für diese Gruppen bot.

Bei mangelhafter Lactaseaktivität gelangt ungespaltener Milchzucker beim Menschen bis in den Dickdarm, wo er von Darmbakterien aufgenommen und vergoren wird. Als Gärungsprodukte entstehen Milchsäure sowie Methan und Wasserstoff. Die Gase führen unter anderem zu Blähungen, die osmotisch aktive Milchsäure zu einem Wassereinstrom in den Darm (osmotischer Diarrhoe).

In Asien und Afrika betrifft die fehlende Lactasepersistenz bzw. Lactoseintoleranz den größten Teil der erwachsenen Bevölkerung (90 % oder mehr), in Westeuropa, Australien und Nordamerika sind es 5-15 % (bei hellhäutigen Menschen). In Deutschland leiden nach Schätzungen 15-25 % der Gesamtbevölkerung an einer Milchzuckerunverträglichkeit. Der Grund für eine Lactoseintoleranz ist ein angeborener Enzymmangel, bei dem die entsprechenden Enzyme fehlen, die den Milchzucker in seine Einzelteile aufspalten und abbauen. In den letzten Jahren ist zumindest das Bewusstsein für einen Zusammenhang der genannten Symptome mit der Anwesenheit von Lactose insbesondere in Milchprodukten stark gewachsen. Dies hat dazu geführt, dass es ein großes Bedürfnis nach lactosearmen oder besser noch lactosefreien Produkten gibt.

Aus dem Stand der Technik sind unterschiedlichste Verfahren bekannt, mit deren Hilfe man Lactose aus Milchprodukten entweder abtrennt und als Nebenprodukt weiterverarbeitet oder durch Zugabe entsprechende Enzyme abbaut.

Gegenstand der EP 1503630 B1 (VALIO) ist beispielsweise ein Verfahren zur Herstellung von lactosefreien Produkten, bei dem die Ausgangsmilch zunächst einer Ultrafiltration unterworfen wird. Das dabei anfallende erste Permeat wird nanofiltriert, wobei die Lactose über das zweite Retentat ausgeschleust wird und die einwertigen Salze (Natrium, Kalium) in das zweite Permeat gelangen. Dieses wird mit Hilfe einer Umkehrosmose aufkonzentriert und das so erhaltene dritte Retentat dem ersten Retentat wieder beigemischt, bevor dieses dann einer Hydrolyse unterworfen wird, um die Lactose enzymatisch abzubauen. Das Verfahren hat indes zwei erhebliche Nachteile: der Lactosegehalt des Retentats, welches hydrolysiert wird, lässt sich nicht steuern, sondern stellt sich aufgrund der Bedingungen in der Ultrafiltration automatisch auf einen sehr niedrigen Wert ein. In der Hydrolyse stehen dann auch nur geringe Mengen an Zucker für die Spaltung zur Verfügung, so dass eine zwar lactosefreie Milch erhalten wird, die jedoch weit weniger süß und geschmacklich ansprechend ist, wie die Ausgangsmilch. Des Weiteren gelangen über den Prozess nur Alkalisalze in die Milch zurück. Um das Geschmacksprofil der Ursprungsmilch wieder einigermaßen zu erreichen, müssen zweiwertige Salze aus anderen Quellen wieder zugesetzt werden. In Summe wird jedenfalls ein Produkt erhalten, welches dem gewünschten Geschmacksprofil der Ausgangsmilch nur angenähert entspricht.

Ein ähnlicher Weg wird in der EP 2207428 B1 (ARLA) vorgeschlagen: hier wird die Milch ebenfalls zunächst einer Ultrafiltration unterworfen, wobei das Permeat dann nanofiltriert wird. Das Permeat aus der Nanofiltration wird mit dem Retentat aus der Ultrafiltration vermischt und anschließend hydrolysiert. Dieses Verfahren weist jedoch bezüglich des Geschmacksprofils der resultierenden Produkte die gleichen Nachteile wie das Valio-Verfahren auf.

Die Aufgabe der vorliegenden Erfindung hat daher darin bestanden, ausgehend von Vollmilch, Magermilch oder standardisierter Milch, welche typisch zwischen 4 und 5 Gew.-% Lactose aufweist, eine lactosefreie Milchzusammensetzung zur Verfügung zu stellen, die jedoch über die gleiche oder die im Wesentlichen gleiche Mineralienzusammensetzung wie die Ausgangsmilch verfügt, so dass deren Geschmacksprofil dem der Ausgangsmilch entspricht.

### BESCHREIBUNG DER ERFINDUNG

Gegenstand der Erfindung ist ein Verfahren zur Herstellung von lactosefreien Milchprodukten, gemäß Anspruch 1.

In einer ersten speziellen Ausführungsform setzt man in Schritt (a) eine solche Menge Lactase ein, dass die im Produkt enthaltene Menge an Lactose vollständig in Glucose und Galactose gespalten wird. Dies bedeutet, dass alle weiteren Prozessschritte mit einer bereits lactosefreien Milch durchgeführt werden, deren Mineralienkonzentration und Zusammensetzung noch an die der Ausgangsmilch angepasst werden muss. In einer alternativen zweiten Ausführungsform umfasst das Verfahren den folgenden weiteren Schritt:
(e) Hydrolyse des standardisierten Milchproduktes aus Schritt (e) unter Zugabe einer solchen Menge an Lactase, dass die noch im Produkt enthaltene Restmenge an Lactose vollständig in Glucose und Galactose gespalten wird.

Diese Ausführungsform der Erfindung kommt dann zum Tragen, wenn im Schritt (a) eine Menge an Lactase eingesetzt worden ist, die gerade nicht ausreicht, um die Gesamtmenge an Lactose zu spalten.

Überraschenderweise wurde gefunden, dass das erfindungsgemäße Verfahren das geschilderte Anforderungsprofil vollständig erfüllt. Dabei wird die Milch zunächst einer Hydrolyse unterworfen, in der jeweils ein Molekül Lactose in ein Molekül Glucose und ein Molekül Galactose gespalten wird. Anschließend wird das Hydrolyseprodukt in eine Proteinfraktion und eine Kohlenhydratfraktion aufgetrennt, letztere zunächst aufkonzentriert und dann der Proteinfraktion unter Zugabe von Wasser in solchen Mengen wieder zugesetzt ("Standardisierung"), dass sich die Protein- und Mineralienzusammensetzung der Ausgangsmilch wieder ergibt. Untersuchungen zur relativen Süßkraft (rS) verschiedener Kohlenhydrate bezogen auf Saccharose (nach Noeske, 1996) ergaben, dass sowohl Glucose (rS=64) als auch Galactose (rS=60) jeweils in etwa die doppelte Süßkraft im Vergleich zu Lactose (rS=30) aufweisen. Vorzugsweise stellt man also den Gehalt an Glucose und Galactose auf einen Wert ein, mit dem der Süßungsgrad der Ausgangsmilch erreicht wird. Dadurch, dass man der Milch bei der Standardisierung keine Fremdsalze, sondern Eigensalze zusetzt, wird nach der Hydrolyse in Summe ein Produkt erhalten, das zwar lactosefrei ist, sich aber ansonsten in der Zusammensetzung von der Ausgangsmilch nicht unterscheidet und daher den gleichen Geschmackseindruck aufweist.

Als lactosefrei sind solche Produkte zu verstehen, die weniger als 0,1 Gew.-% und vorzugsweise weniger als 0,01 Gew.-% Lactose enthalten.

### HYDROLYSE

Als Ausgangsstoff kommen Vollmilch, Magermilch oder standardisierte Milch mit einem Lactosegehalt im Bereich von etwa 3 bis etwa 5 Gew.-% und vorzugsweise etwa 4 bis etwa 4,5 Gew.-% in Frage. Lactose gehört zur Gruppe der Disaccharide und besteht aus den beiden Molekülen D-Galactose und D-Glucose, die über eine β-1,4-glycosidische Bindung verbunden sind.

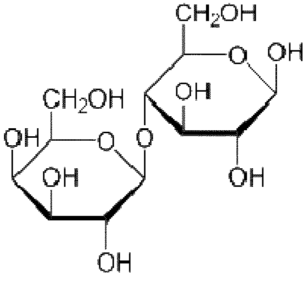

Zum Abbau in die beiden Zuckerkomponenten wird Lactose mit dem Enzym Lactase (auch als LPH oder *LCT* bezeichnet) versetzt. Die Hydrolyse erfolgt vorzugsweise in einem Rührbehälter mit kontinuierlichem Zulauf und Ablauf sowie einer Dosiervorrichtung zur Zugabe des Enzyms und einem am Boden des Reaktors befindlichen Ventil zum Ablassen desaktivierten Enzyms, das im Laufe der Zeit sedimentiert. Es hat sich als vorteilhaft erwiesen, eine wirksame Enzymkonzentration von etwa 180.000 bis 250.000 FCC-Einheiten Lactase pro kg zu hydrolysierender Lactose einzusetzen und die Reaktion bei Temperaturen im Bereich von etwa 4 bis etwa 65 °C und vorzugsweise im Bereich von 20 bis 30°C sowie einem leicht sauren pH-Wert von etwa 5 bis 6 durchzuführen.

### 1. NANOFILTRATION

Im zweiten Verfahrensschritt wird das Hydrolyseprodukt, in eine Proteinfraktion und eine Kohlenhydratfraktion aufgetrennt.

Die Nanofiltration gehört zu den Filtrationsverfahren aus dem Bereich der Membrantechnik, mit der sich makromolekulare Substanzen und kleine Partikel aus einem Medium abtrennen und aufkonzentrieren lassen. Man unterscheidet Mikrofiltration, Ultrafiltration und Nanofiltration über den Grad der Abtrennung. Liegt die Ausschlussgrenze (oder auch "*Cut-off*") bei 100 nm oder darüber, spricht man von Mikrofiltration. Liegt die Ausschlussgrenze in dem Bereich zwischen 2 bis 100 nm, bezeichnet man dies als Ultrafiltration. Bei der Nanofiltration liegt die Ausschlussgrenze unterhalb von 2 nm. In jedem dieser Fälle handelt es sich um rein physikalische, d.h. mechanische Membrantrennverfahren, die nach Prinzip des mechanischen Größenausschlusses arbeiten: alle Partikel in den Fluiden, die größer als die Membranporen sind, werden von der Membran zurückgehalten. Treibende Kraft in beiden Trennverfahren ist der Differenzdruck zwischen Zulauf und Ablauf der Filterfläche, der zwischen 0,1 und 40 bar liegt.

Die Ausschlussgrenzen von Nanofiltrationsmembranen werden auch in Form des *NMWC* (englisch: Nominal Molecular Weight Cut-Off, auch *MWCO*, Molecular Weight Cut Off, Einheit: Dalton) angegeben. Er ist definiert als die minimale Molekülmasse globulärer Moleküle, welche durch die Membran zu 90% zurückgehalten werden. In der Praxis sollte der NMWC mindestens 20 % niedriger sein als die Molmasse des abzutrennenden Moleküls. Weitere qualitative Aussagen über die Filtration lassen sich anhand des *Flux* (Wasserwert) (Transmembranfluss oder Durchtrittsrate) machen. Dieser verhält sich im Idealfall proportional zum Transmembrandruck und reziprok zum Membranwiderstand. Diese Größen werden sowohl von den Eigenschaften der verwendeten Membran als auch durch Konzentrationspolarisation und eventuell auftretendes Fouling bestimmt. Die Durchtrittsrate wird auf 1 m² Membranfläche bezogen. Ihre Einheit ist l/(m²h bar).

In einer bevorzugten Ausführungsform des erfindungsgemäßen Verfahrens wird die Nanofiltration unter Zugabe einer solchen Menge Diawassers durchgeführt, dass ein erstes Retentat mit einem Verdünnungsfaktor von etwa 1 bis etwa 10 erhalten und vorzugsweise etwa 3 erhalten wird. Vorzugsweise bezieht man dabei das Diawasser aus dem zweiten Permeat P2 der nachfolgenden Umkehrosmose.

Für die Nanofiltration werden offenporige Membranen verwendet, die einen Porendurchmesser im Bereich von 500 bis 1.000 und vorzugsweise 500 bis etwa 800 Dalton besitzen.

Der Werkstoff der Filterfläche kann Edelstahl, Polymerwerkstoffen, Keramik, Aluminiumoxid oder textilen Gewebe darstellen. Es gibt verschiedene Erscheinungsformen der Filterelemente: Kerzenfilter, Flachmembranen, Spiralwickelmembranen, Taschenfilter und Hohlfasermodule, die im Sinne der vorliegenden Erfindung alle grundsätzlich geeignet sind. Vorzugsweise werden jedoch Spiralwickelmembranen aus Polymerwerkstoffen oder Kerzenfilter aus Keramik oder Aluminiumoxid eingesetzt, wobei sich die erste Ausführungsform für die Ultrafiltration und die zweite für die Nanofiltration besonders bevorzugt erwiesen hat.

Die Nanofiltration kann im Sinne der vorliegenden Erfindung "heiß" oder "kalt", d.h. im Temperaturbereich von etwa 4 bis etwa 55 °C durchgeführt werden. Bevorzugt ist es jedoch, bei Temperaturen im niedrigen Bereich von etwa 4 bis etwa 25 °C und insbesondere etwa 6 bis etwa 15 °C zu arbeiten.

### UMKEHROSMOSE

Das erste Permeat P1 der Nanofiltration ist praktisch frei von Proteinen, enthält jedoch Glucose, Galactose und Mineralien. In der folgenden Umkehrosmose wird die Menge an diesen beiden Komponenten aufkonzentriert.

Die Umkehrosmose oder Reversosmose ist ein physikalisches Verfahren zur Aufkonzentrierung von in Flüssigkeiten gelösten Stoffen, bei der mit Druck des natürlichen Osmose-Prozesses umgekehrt wird. Das Medium, in dem die Konzentration eines bestimmten Stoffes verringert werden soll, ist durch eine halbdurchlässige (semipermeable) Membran von dem Medium getrennt, in dem die Konzentration erhöht werden soll. Dieses wird einem Druck ausgesetzt, der höher sein muss als der Druck, der durch das osmotische Verlangen zum Konzentrationsausgleich entsteht. Dadurch können die Moleküle des Lösungsmittels gegen ihre "natürliche" osmotische Ausbreitungsrichtung wandern. Das Verfahren drückt sie in das Kompartiment, in dem gelöste Stoffe weniger konzentriert vorliegen.

Die osmotische Membran, die nur die Trägerflüssigkeit (Solvent) durchlässt und die gelösten Stoffe (Solute) zurückhält, muss diesen hohen Drücken standhalten können. Wenn der Druckunterschied das osmotische Gefälle mehr als ausgleicht, passen die Solventmoleküle wie bei einem Filter durch die Membran, während die übrigen Moleküle zurückgehalten werden. Im Gegensatz zu einem klassischen Membranfilter verfügen Osmosemembranen nicht über durchgehende Poren. Vielmehr wandern die Ionen und Moleküle durch die Membran hindurch, indem sie durch das Membranmaterial diffundieren.

Der osmotische Druck steigt mit zunehmendem Konzentrationsunterschied. Wird der osmotische Druck gleich dem angelegten Druck, kommt der Prozess zum Stehen. Es liegt dann ein osmotisches Gleichgewicht vor. Ein stetiger Abfluss des Konzentrats kann das verhindern. Beim Konzentratauslass wird der Druck entweder über einen Druckregler kontrolliert oder über einen Druckaustauscher genutzt, um den im Zulauf des Systems benötigten Druck aufzubauen. Druckaustauscher senken durch Energierückgewinnung sehr effektiv die Betriebskosten einer Umkehrosmoseanlage. Der Energieaufwand pro Kubikmeter Wasser liegt bei 4 bis 9 kWh. Vorzugsweise beträgt der Konzentrierungsfaktor im erfindungsgemäßen Verfahren etwa 2,5 bis etwa 5 und insbesondere etwa 3 bis etwa 4.

Das Auskristallisieren (Ausfallen) der Solute in den Membranen muss verhindert werden. Dies kann durch Zugabe von Antibelagmitteln (engl. *Antiscaling*) oder Säuren erreicht werden. Antibelagmittel sind hier polymere Verbindungen auf Phosphat- oder Maleinsäurebasis, welche die sich bildenden Kristallite umschließen und so verhindern, dass kristalline Ausfällungen auf der Membran entstehen können. Eine Reinigung der Membran kann dennoch erforderlich bleiben. Um Beschädigungen der Membran zu verhindern, können zudem Filter vorgeschaltet werden. Ein Feinfilter kann mechanische, ein Aktivkohlefilter chemische Beschädigungen (z. B. durch Chlor) verhindern.

Bei der Umkehrosmose wird ein zweites Permeat erhalten, das im Wesentlichen nur Diawasser darstellt, das zurück in die Nanofiltration geführt werden kann, sowie ein Retentat, in dem Kohlenhydrate und Mineralien enthalten sind und das gegebenenfalls nach weiterer Konzentrierung (z.B. durch Eindampfen) eine Trockenmasse in der Größenmasse von etwa 10 bis etwa 15 Gew.-% besitzt.

### 2. NANOFILTRATION

Alternativ, jedoch nicht erfindungsgemäß, kann statt der Umkehrosmose auch eine zweite Nanofiltration erfolgen. Dabei kommen dann allerdings vorzugsweise Membranen mit einem Porendurchmesser von etwa 150 bis etwa 200 Dalton, zum Einsatz. Permeat und Retentat sind in ihrer Zusammensetzung den Produkten aus der Umkehrosmose sehr ähnlich; lediglich weist das Permeat der Nanofiltration einen höheren Gehalt an einwertigen Salzen auf. Auch dieses Permeat kann als Diafiltrationsmedium genutzt werden.

### MISCHUNG

Der Mischungsschritt dient der Herstellung eines standardisierten Milchproduktes, das nachfolgend - falls noch erforderlich - durch eine weitere Hydrolyse vollständig von Lactose befreit wird. Dazu wird dem im ersten Schritt erhaltenen proteinreichen ersten Retentat definierte Mengen an Kohlenhydraten (Glucose und Galactose) und Mineralien zugesetzt. Ziel ist es insbesondere, ein Produkt zu erhalten, das gegenüber der Ausgangsmilch eine entsprechend angepasste Zuckerkonzentration aufweist, um den gleichen Süßungsgrad zu erhalten. Auch die Zugabe der Mineralien wird mit dem Ziel verfolgt, wieder die ursprüngliche Salzkonzentration und Salzzusammensetzung einzustellen, damit der Geschmackseindruck der Ursprungsmilch erhalten bleibt.

Das erfindungsgemäße Verfahren ist daher des Weiteren in einer spezifischen Ausgestaltungsform dadurch gekennzeichnet, dass man dem ersten Retentat R1
(i) eine solche Menge des zweiten Retentats R2 zusetzt, dass sich eine Konzentration an Glucose und Galactose von gemeinsam etwa 1,0 bis etwa 3,5 Gew.-%, vorzugsweise etwa 1,5 bis etwa 3,0 Gew.-% - bezogen auf die resultierende Standardmilch - ergibt und/oder
(ii) eine solche Menge des zweiten Permeats P2 zusetzt, dass sich eine Mineralienkonzentration von etwa 0,6 bis etwa 1,0 Gew.-% - bezogen auf die resultierende Standardmilch - ergibt, und/oder
(iii) eine solche Menge des zweiten Permeats P2 zusetzt, so dass sich durch die Verdünnung eine Proteinkonzentration von etwa 3,5 bis etwa 4,0 Gew.-% - bezogen auf die resultierende Standardmilch - ergibt.

### REFERENZZEICHEN IN DER ABBILDUNG

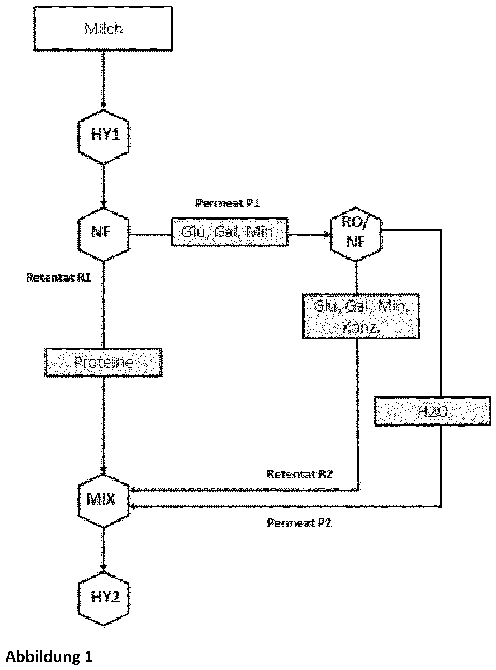

Das erfindungsgemäße Verfahren wird schematisch in **Abbildung 1** zusammengefasst. Dabei bedeuten die Abkürzungen:
- NF: = Nanofiltration
- RO: = Umkehrosmose
- MIX: = Vermischung
- HY: = Hydrolyse
- Glu: = Glucose
- Gal: = Galactose
- Min: = Mineralien

### BEISPIELE

### BEISPIEL 1

100 kg Milch folgender Zusammensetzung

| **MILCH** | **Menge [Gew.-%]** |
|---|---|
| Lactose | 4,0 |
| Proteine | 3,5 |
| Mineralien | 0,8 |

wurden in einem Rührkessel bei 25 °C auf pH = 6 eingestellt und mit einer solchen Menge Lactase versetzt, dass sich eine Konzentration von etwa 200.000 FCC Einheiten/kg Lactose ergab. Nach einer Hydrolysezeit von etwa 3 Stunden wurde ein Produkt erhalten, das die folgende Zusammensetzung aufwies:

| **HYDROLOYSEPRODUKT** | **Menge [Gew.-%]** |
|---|---|
| Lactose | < 0,1 |
| Glucose | 2,0 |
| Galactose | 2,0 |
| Proteine | 3,5 |
| Mineralien | 0,8 |

Das Hydrolyseprodukt wurde anschließend bei 10°C einer ersten Nanofiltration mit einer offenporigen Membran mit einer Porenweite von 600 Dalton unter Zugabe von Diawasser unterworfen. Der Verdünnungsfaktor betrug 3, wobei als Zwischenprodukt ein proteinreiches erstes Retentat R1 erhalten wurde, welches die folgende Zusammensetzung aufwies:

| **RETENTAT R1** | **Menge [Gew.-%]** |
|---|---|
| Lactose | < 0,1 |
| Glucose | 2,0 |
| Galactose | 2,0 |
| Proteine | 11,0 |
| Mineralien | 0,8 |

Gleichzeitig wurde ein proteinarmes erstes Permeat P1 erhalten, welches die folgende Zusammensetzung aufwies:

| **PERMEAT P1** | **Menge [Gew.-%]** |
|---|---|
| Lactose | < 0,1 |
| Glucose | 2,0 |
| Galactose | 2,0 |
| Proteine | < 0,1 |
| Mineralien | 0,4 |

Das erste Permeat P1 wurde bei 10 °C einer Umkehrosmose mit einem Konzentrierungsfaktor 3,5 unterworfen. Dabei wurde ein zweites Permeat P2 erhalten, welches praktisch nur aus Wasser bestand. Das bei der Umkehrosmose erhaltene zweite kohlenhydratreiche Retentat R2 wies eine Trockenmasse von etwa 13 Gew.-% und folgende Zusammensetzung auf:

| **RETENTAT R2** | **Menge [Gew.-%]** |
|---|---|
| Lactose | < 0,1 |
| Glucose | 6,0 |
| Galactose | 6,0 |
| Proteine | < 0,1 |
| Mineralien | 1,2 |

Anschließend wurde das Retentat R1 mit einer solchen Menge kohlenhydratreichen Retentats R2 sowie des Permeats P2 versetzt, dass eine standardisierte Milch der folgenden Zusammensetzung resultierte:

| **STANDARDMILCH** | **Menge [Gew.-%]** |
|---|---|
| Lactose | < 0,1 |
| Glucose | 1,0 |
| Galactose | 1,0 |
| Proteine | 3,5 |
| Mineralien | 0,8 |

Die standardisierte Milch wies demnach den gleichen Gehalt an Proteinen sowie die gleiche Menge und Zusammensetzung an Mineralien wie die Ausgangsmilch auf, enthielt jedoch nur die entsprechende Menge an Glucose und Galactose, mit der die gleiche Süßkraft der Ausgangsmilch erzielt wurde. Auf diese Weise wurde eine lactosefreie Milch erhalten, die den gleichen Süßungsgrad und das gleiche Geschmacksprofil wie die ursprüngliche Milch aufwies.

### BEISPIEL 2 (nicht erfindungsgemäß)

100 kg Milch folgender Zusammensetzung

| **MILCH** | **Menge [Gew.-%]** |
|---|---|
| Lactose | 4,0 |
| Proteine | 3,5 |
| Mineralien | 0,8 |

wurden in einem Rührkessel bei 25 °C auf pH = 6 eingestellt und mit einer solchen Menge Lactase versetzt, dass sich eine Konzentration von etwa 200.000 FCC Einheiten/kg Lactose ergab. Nach einer Hydrolysezeit von etwa 3 Stunden wurde ein Produkt erhalten, das die folgende Zusammensetzung aufwies:

| **HYDROLOYSEPRODUKT** | **Menge [Gew.-%]** |
|---|---|
| Lactose | < 0,1 |
| Glucose | 2,0 |
| Galactose | 2,0 |
| Proteine | 3,5 |
| Mineralien | 0,8 |

Das Hydrolyseprodukt wurde anschließend bei 10°C einer Nanofiltration mit einer offenporigen Membran mit einer Porenweite von 600 Dalton unter Zugabe von Diawasser unterworfen. Der Verdünnungsfaktor betrug 3, wobei als Zwischenprodukt ein proteinreiches erstes Retentat R1 erhalten wurde, welches die folgende Zusammensetzung aufwies:

| **RETENTAT R1** | **Menge [Gew.-%]** |
|---|---|
| Lactose | < 0,1 |
| Glucose | 2,0 |
| Galactose | 2,0 |
| Proteine | 11,0 |
| Mineralien | 0,8 |

Gleichzeitig wurde ein proteinarmes erstes Permeat P1 erhalten, welches die folgende Zusammensetzung aufwies:

| **PERMEAT P1** | **Menge [Gew.-%]** |
|---|---|
| Lactose | < 0,1 |
| Glucose | 2,0 |
| Galactose | 2,0 |
| Proteine | < 0,1 |
| Mineralien | 0,4 |

Das erste Permeat P1 wurde bei 10 °C einer zweiten Nanofiltration mit einer Membran mit einer Porenweite von 150 Dalton mit einem Konzentrierungsfaktor 3,5 unterworfen. Dabei wurde ein zweites Permeat P2 erhalten, welches praktisch nur aus Wasser sowie Alkalisalzen bestand. Das bei der Nanofiltration erhaltene zweite kohlenhydratreiche Retentat R2 wies eine Trockenmasse von etwa 13 Gew.-% und folgende Zusammensetzung auf:

| **RETENTAT R2** | **Menge [Gew.-%]** |
|---|---|
| Lactose | < 0,1 |
| Glucose | 6,0 |
| Galactose | 6,0 |
| Proteine | < 0,1 |
| Mineralien | 1,2 |

Anschließend wurde das erste Retentat R1 mit einer solchen Menge kohlenhydratreichen zweiten Retentats R2 sowie des zweiten Permeats P2 versetzt, dass eine standardisierte Milch der folgenden Zusammensetzung resultierte:

| **STANDARDMILCH** | **Menge [Gew.-%]** |
|---|---|
| Lactose | < 0,1 |
| Glucose | 1,0 |
| Galactose | 1,0 |
| Proteine | 3,5 |
| Mineralien | 0,8 |

Die standardisierte Milch wies demnach den gleichen Gehalt an Proteinen sowie die gleiche Menge und Zusammensetzung an Mineralien wie die Ausgangsmilch auf. Die Gesamtmenge an Kohlenhydraten (Glucose + Galactose) betrug 2 Gew.-% Auf diese Weise wurde eine lactosefreie Milch erhalten, die den gleichen Süßungsgrad und das gleiche Geschmacksprofil wie die ursprüngliche Milch aufwies.

## Patentansprüche

1. Verfahren zur Herstellung von lactosefreien Milchprodukten, umfassend die folgenden Schritte:
(a) Hydrolyse einer Ausgangsmilch unter Zugabe von Lactase;
(b) Nanofiltration des Hydrolyseproduktes unter Verwendung einer offenporigen Membran, die einen Porendurchmesser im Bereich von 500 bis 1.000 Dalton aufweist, zur Erzeugung eines ersten Permeats P1 und eines ersten Retentats R1;
(c) Umkehrosmose des ersten Permeats P1 zur Erzeugung eines zweiten Permeats P2 und eines zweiten Retentats R2;
(d) Vermischen des ersten Retentats R1 mit jeweils einer solchen Menge des zweiten Permeats P2 sowie zweiten Retentats R2, so dass ein standardisiertes Milchprodukt erhalten wird, dessen Gehalt an Proteinen und Mineralien dem der Ausgangsmilch entspricht.

2. Verfahren nach Anspruch 1, **dadurch gekennzeichnet, dass** man in Schritt (a) eine solche Menge Lactase einsetzt, dass die im Produkt enthaltene Menge an Lactose vollständig in Glucose und Galactose gespalten wird;

3. Verfahren nach Anspruch 1, **dadurch gekennzeichnet, dass** es als weiteren Schritt umfasst:
(e) Hydrolyse des standardisierten Milchproduktes aus Schritt (e) unter Zugabe einer solchen Menge an Lactase, dass die noch im Produkt enthaltene Restmenge an Lactose vollständig in Glucose und Galactose gespalten wird.

4. Verfahren nach mindestens einem der Ansprüche 1 bis 3, **dadurch gekennzeichnet, dass** man als Ausgangsmilch Vollmilch, Magermilch oder Standardmilch einsetzt.

5. Verfahren nach mindestens einem der Ansprüche 1 bis 4, **dadurch gekennzeichnet, dass** man eine Ausgangsmilch einsetzt, die einen Lactosegehalt im Bereich von 3 bis 5 Gew.-% aufweist.

6. Verfahren nach mindestens einem der Ansprüche 1 bis 5, **dadurch gekennzeichnet, dass** man die erste Nanofiltration mit einem Volumenverdünnungsfaktor im Bereich von 1 bis 10 durchführt.

7. Verfahren nach mindestens einem der Ansprüche 1 bis 6, **dadurch gekennzeichnet, dass** man die erste Nanofiltration in Schritt (b) bei Temperaturen im Bereich von 4 bis 25 °C durchführt.

8. Verfahren nach mindestens einem der Ansprüche 1 bis 7, **dadurch gekennzeichnet, dass** man die Umkehrosmose mit einem Konzentrierungsfaktor von 2,5 bis 5 durchführt.

## Claims

1. A process for producing lactose-free dairy products, comprising the following steps:
(a) hydrolysing a starting milk while adding lactase;
(b) subjecting the hydrolyzation product to nanofiltration with an open-pore membrane having a pore diameter in the range of 500 to 1,000 Dalton for producing a first permeate P1 and a first retentate R1;
(c) subjecting the first permeate P1 to reverse osmosis for producing a second permeate P2 and a second retentate R2;
(d) mixing the first retentate R1 with an amount of the second permeate P2 and the second retentate R2 each such that a standardized dairy product is obtained, the content of proteins and minerals of which corresponds to the one of the starting milk.

2. The process according to claim 1, comprising applying in step (a) an amount of lactase such that the amount of lactose contained in the product is completely broken down into glucose and galactose.

3. The process according to claim 1, further comprising the step of:
(e) hydrolyzing said standardized dairy product of step (d) while adding an amount of lactase such that the residual amount of lactose still contained in the product is completely broken down into glucose and galactose.

4. The process according to at least one of claims 1 to 3, comprising applying whole milk, skimmed milk, or standard milk as starting milk.

5. The process according to at least one of claims 1 to 4, comprising applying a starting milk having a lactose content in the range of 3 to 5 wt%.

6. The process according to at least one of claims 1 to 5, wherein the first nanofiltration is performed with a volume dilution factor in the range of 1 to 10.

7. The process according to at least one of claims 1 to 6, wherein the first nanofiltration in step (b) is performed at temperatures in the range of 4 to 25 °C.

8. The process according to at least one of claims 1 to 7, wherein the reverse osmosis is performed with a concentration factor of 2.5 to 5.

## Revendications

1. Procédé de fabrication de produits laitiers sans lactose, comprenant les étapes suivantes :
(a) l'hydrolyse d'un lait de départ avec ajout de lactase ;
(b) la nanofiltration du produit d'hydrolyse en utilisant une membrane à pores ouverts qui présente un diamètre de pores dans la plage allant de 500 à 1000 Dalton pour obtenir un premier perméat P1 et un premier rétentat R1 ;
(c) l'osmose inverse du premier perméat P1 pour obtenir un deuxième perméat P2 et un deuxième rétentat R2 ;
(d) le mélange du premier rétentat R1 avec à chaque fois une quantité telle du deuxième perméat P2 et du deuxième rétentat R2 qu'un produit laitier normalisé dont la teneur en protéines et minéraux correspond à celle du lait de départ soit obtenu.

2. Procédé selon la revendication 1, **caractérisé en ce qu'**une quantité de lactase telle que la quantité de lactose contenue dans le produit soit entièrement clivée en glucose et galactose est utilisée à l'étape (a).

3. Procédé selon la revendication 1, **caractérisé en ce qu'**il comprend en tant qu'étape supplémentaire :
(e) l'hydrolyse du produit laitier normalisé de l'étape (d) avec ajout d'une quantité de lactase telle que la quantité résiduelle de lactose encore contenue dans le produit soit entièrement clivée en glucose et galactose.

4. Procédé selon au moins l'une quelconque des revendications 1 à 3, **caractérisé en ce que** du lait entier, du lait écrémé ou du lait standard est utilisé en tant que lait de départ.

5. Procédé selon au moins l'une quelconque des revendications 1 à 4, **caractérisé en ce qu'**un lait de départ qui présente une teneur en lactose dans la plage allant de 3 à 5 % en poids est utilisé.

6. Procédé selon au moins l'une quelconque des revendications 1 à 5, **caractérisé en ce que** la première nanofiltration est réalisée avec un facteur de dilution volumique dans la plage allant de 1 à 10.

7. Procédé selon au moins l'une quelconque des revendications 1 à 6, **caractérisé en ce que** la première nanofiltration à l'étape (b) est réalisée à des températures dans la plage allant de 4 à 25 °C.

8. Procédé selon au moins l'une quelconque des revendications 1 à 7, **caractérisé en ce que** l'osmose inverse est réalisée avec un facteur de concentration de 2,5 à 5.
